# EUROPEAN PATENT APPLICATION

(11) **EP 4 793 551 A1**
(43) Date of publication of application: **19.08.2026**
(21) Application number: 26155504.9
(22) Date of filing: 30.01.2026
(51) Int. Cl.: F23R 3/28

(54) **METHOD FOR MANUFACTURING NOZZLE FOR COMBUSTOR, AND NOZZLE FOR COMBUSTOR**

(30) Priority: 18.02.2025 KR 20250020994
(71) Applicant: Doosan Enerbility Co., Ltd., Seongsan-gu Changwon-si, Gyeongsangnam-do 51711 (KR)
(72) Inventor: JEONG, Han Jin, 12913 Hanam-si (KR)
(74) Representative: Ter Meer Steinmeister & Partner

(57) **Abstract**

A method for manufacturing a nozzle (1230) for a combustor (1200) is provided. The method for manufacturing the nozzle for the combustor includes primarily disposing a rear plate (1235a) at a location spaced apart from a front end of a mixing tube (1234), the mixing tube being inserted through the rear plate, secondarily disposing a front plate (1235b) on an outer circumferential surface of the front end of the mixing tube, the mixing tube being inserted through the front plate, and coupling an air tube (1233), which extends in a longitudinal direction, to the front end of the mixing tube in an extended configuration.

## Description

### BACKGROUND

### Field

Apparatuses and methods consistent with exemplary embodiments relate to a method for manufacturing a nozzle for a combustor, and a nozzle for a combustor.

### Description of the Related Art

Gas turbines are power plants that mix and combust compressed air from a compressor and fuel, and use high-temperature gas produced by combustion to rotate a turbine. Gas turbines are used to drive generators, aircraft, ships, trains, or the like.

The gas turbine includes a compressor, a combustor, and a turbine. The compressor sucks outside air, compresses the air, and delivers the compressed air to the combustor. The air compressed by the compressor becomes high-pressure and high-temperature. The combustor mixes the compressed air supplied from the compressor with fuel and combusts a mixture to produce combustion gas which is discharged into the turbine. Turbine blades in the turbine are rotated by the combustion gas to generate power. The generated power is used in various fields, including power generation and machinery operation.

Each nozzle of the combustor has a structure in which multiple tube bundles are inserted through a fuel chamber. Compressed air is supplied from a front space to the multiple tube bundles, and fuel is introduced from the fuel chamber into the tubes, such that the air and fuel are mixed in the tubes and then injected into a combustion chamber.

In this case, the fuel chamber is disposed at a distance spaced apart from a first end of the tube through which air is introduced, to prevent fuel from being discharged through the air-introducing portion. Furthermore, to provide sufficient space within the tube for mixing air and fuel, the fuel chamber may be disposed at a distance spaced apart from a second end of the tube.

However, the above structure does not provide sufficient workspace to weld each tube to the fuel chamber. Therefore, the nozzle for a combustor is configured such that a brazing filler is applied to an outer surface of each tube and then heat-treated, so that a plurality of tubes is brazed to the fuel chamber simultaneously.

However, the above method can result in fuel leakage if any single tube is not properly brazed. Furthermore, the brazing method may cause separation between the fuel chamber and the tube when the brazed portion is exposed to high temperature and the brazing filler is melted. In addition, the bonding strength is relatively low, which presents further problems.

### SUMMARY

Aspects of one or more exemplary embodiments provide a nozzle for a combustor, and a method for manufacturing a nozzle for a combustor, in which the nozzle has enhanced structural stiffness, heat resistance, and airtightness by welding a fuel chamber to a plurality of tubes.

Additional aspects will be set forth in part in the description which follows and, in part, will become apparent from the description, or may be learned by practice of the exemplary embodiments.

According to an aspect of an exemplary embodiment, there is provided a method for manufacturing a nozzle for a combustor, the method including: primarily disposing a rear plate at a location spaced apart from a front end of a mixing tube, the mixing tube being inserted through the rear plate; secondarily disposing a front plate on an outer circumferential surface of the front end of the mixing tube, the mixing tube being inserted through the front plate; and coupling an air tube, which extends in a longitudinal direction, to the front end of the mixing tube in an extended configuration.

The method may further include: coupling the mixing tube and the rear plate to each other via welding between the primarily disposing of the rear plate and the secondarily disposing of the front plate.

The method may further include: coupling the mixing tube and the front plate to each other via welding between the secondarily disposing of the front plate and the coupling of the air tube.

The rear plate may include a rear side wall protruding toward the front plate, the front plate may include a front side wall protruding toward the rear plate, and the rear side wall and the front side wall may be in contact with each other.

The method may further include: coupling the rear side wall and the front side wall to each other via welding.

The coupling of the air tube may be performed by coupling the air tube to the mixing tube via brazing.

According to an aspect of another exemplary embodiment, there is provided a nozzle for a combustor, the nozzle including: a mixing tube extending in a longitudinal direction, the mixing tube being configured to mix air and fuel; a fuel chamber installed on an outer circumferential surface of the mixing tube, the mixing tube being inserted through the fuel chamber, and the fuel chamber configured to supply the fuel to the mixing tube; and an air tube, provided separately from the mixing tube, coupled to a front end of the mixing tube in an extended configuration, the air tube configured to supply air into the mixing tube.

With reference to the front end of the mixing tube, the air tube may be disposed at a front portion thereof, and the fuel chamber may be disposed at a rear portion thereof.

The fuel chamber may include: a front plate disposed on an outer circumferential surface of the front end of the mixing tube; and a rear plate spaced apart from the front plate in the longitudinal direction.

The mixing tube may include a plurality of fuel injection holes spaced apart from each other in a circumferential direction, the plurality of fuel injection holes being located between the front plate and the rear plate.

The nozzle may further include a fuel tube coupled to the front plate and supplying fuel to the fuel chamber.

The fuel tube may be disposed parallel to the air tube.

The fuel tube may have a double tube structure, and the fuel tube may include: a bypass passage formed in a central tube; and a main tube surrounding the central tube.

The main tube may be connected to an inner portion of the fuel chamber, and the central tube may be inserted through the rear plate.

The nozzle may further include a non-mixing tube disposed parallel to the mixing tube and coupled to the rear plate, wherein the non-mixing tube may be connected to the central tube.

According to one or more exemplary embodiments, the fuel chamber may be coupled to the plurality of tubes via welding, thereby enhancing structural stiffness, heat-resistance, and airtightness of the nozzle for a combustor.

### BRIEF DESCRIPTION OF THE DRAWINGS

The above and other aspects will become more apparent from the following description of the exemplary embodiments with reference to the accompanying drawings, in which:
FIG. 1 is a view showing an inner portion of a gas turbine;
FIG. 2 is a view showing a combustor of FIG. 1;
FIG. 3 is a perspective view showing a nozzle for a combustor according to an exemplary embodiment;
FIG. 4 is a sectional view showing a side section of the nozzle;
FIG. 5 is an enlarged view showing part A in FIG. 4;
FIG. 6 is a perspective view showing the nozzle for a combustor at another angle;
FIG. 7 is a perspective view showing primarily disposing in a method for manufacturing a nozzle for a combustor according to an exemplary embodiment;
FIG. 8 is a perspective view showing secondarily disposing in the method for manufacturing a nozzle;
FIG. 9 is an enlarged-sectional view showing part A in FIG. 8; and
FIG. 10 is a perspective view showing coupling of an air tube in the method for manufacturing a nozzle.

### DETAILED DESCRIPTION

Various modifications and various embodiments will be described in detail with reference to the accompanying drawings. However, it should be understood that various embodiments are not for limiting the scope of the disclosure to the specific embodiments, but they should be interpreted to include all of modifications, equivalents, additions or substitutions of the embodiments included within the scope disclosed herein.

The terminology used herein is for the purpose of describing specific embodiments only and is not intended to limit the scope of the disclosure. As used herein, the singular forms "a", "an", and "the" are intended to include the plural forms as well, unless the context clearly indicates otherwise. It will be further understood that the terms "comprise", "include", "have" specify the presence of stated features, integers, steps, operations, elements, components, and/or combinations thereof, but do not preclude the presence or addition of one or more other features, integers, steps, operations, elements, components, and/or combinations thereof.

Hereinbelow, exemplary embodiments will be described in detail with reference to the accompanying drawings. It is noted that like reference numerals refer to like parts throughout the various drawings, although the same components are illustrated in the different drawings and exemplary embodiments. In certain embodiments, detailed descriptions of known functions and configurations which are deemed to make the gist of the present disclosure obscure will be omitted. For the same reason, some components in the accompanying drawings may be exaggerated, omitted, or simplified.

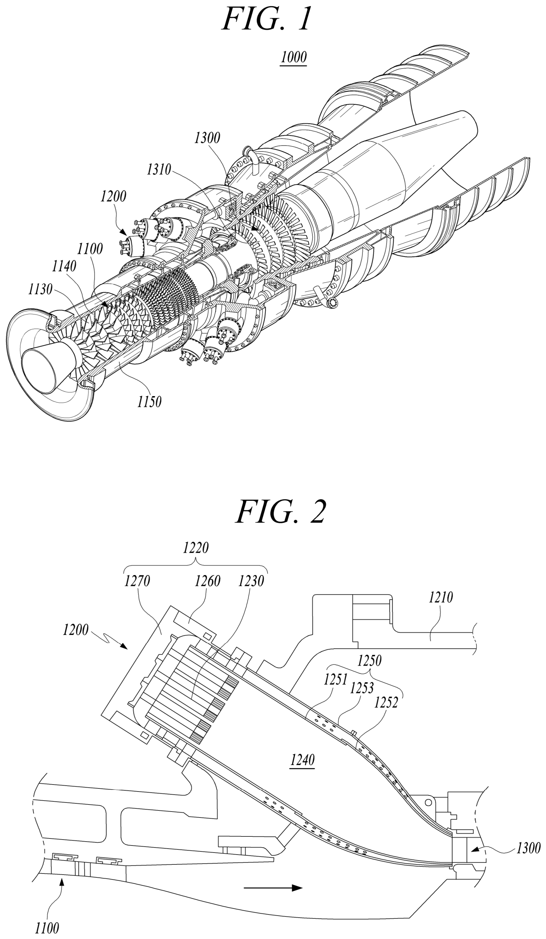

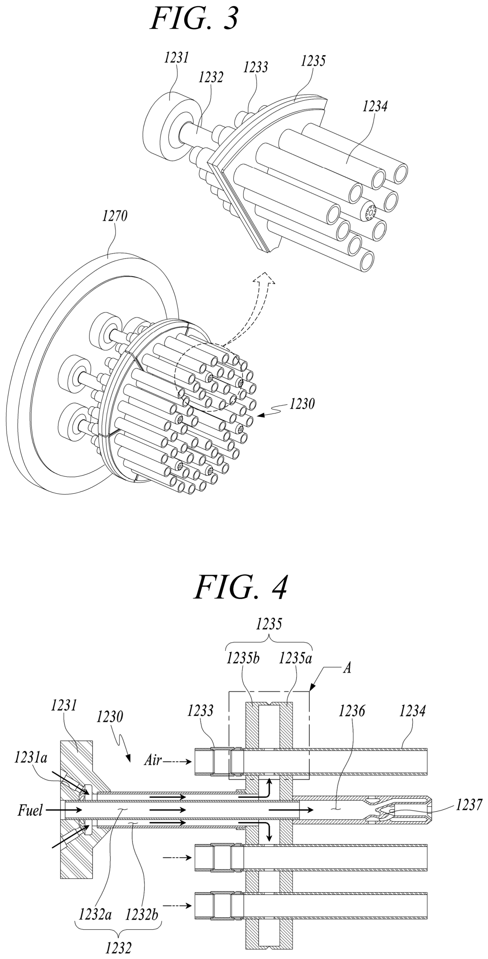

As used herein, the term "longitudinal direction" refers to a direction in which a mixing tube 1234 of FIG. 3 extends. The term "radial direction" refers to a direction in which a radius of a nozzle 1230 increases or decreases, and the term "circumferential direction" refers to a circumferential direction of the nozzle 1230. As used herein, the terms "upper stream" and "lower stream" are relative terms defined with respect to a flow direction of air or fuel, such that air or fuel is introduced at "upper stream" and discharged at "lower stream". Further, the term "front" refers to a direction in which a nozzle 1230 in FIG. 2 faces a head plate 1270, and the term "rear" refers to a direction in which the nozzle 1230 faces a combustor 1240.

Hereinbelow, the gas turbine according to an exemplary embodiment will be described with reference to the accompanying drawings.

FIG. 1 is a view showing an inner portion of the gas turbine according to an exemplary embodiment. FIG. 2 is a view showing a combustor of FIG. 1.

An ideal thermodynamic cycle of a gas turbine 1000 may ideally comply with the Brayton cycle. The Brayton cycle includes four processes, which include isentropic compression (i.e., an adiabatic compression) process, isobaric heating process, isentropic expansion (i.e., an adiabatic expansion) process, and isobaric cooling process. In other words, in the Brayton cycle, thermal energy may be released by combustion of fuel in an isobaric environment after external air is sucked and compressed into high pressure air, hot combustion gas may be expanded to be converted into kinetic energy, and exhaust gas with residual energy may be discharged to the outside. As such, the Brayton cycle may consist of four thermodynamic processes of compression, heating, expansion, and cooling.

The gas turbine 1000 implementing the Brayton cycle may include a compressor 1100, a combustor 1200, and a turbine 1300. Although the following description will refer to FIG. 1, the present disclosure may also be broadly applied to other turbine engine having the same configuration as the gas turbine 1000 shown in FIG. 1.

Referring to FIG. 1, the compressor 1100 of the gas turbine 1000 may suck and compress external air. The compressor 1100 may supply compressed air from compressor blades 1130 to the combustor 1200, and also supply cooling air to a high-temperature area in the gas turbine 1000. Here, because the sucked air is compressed in the compressor 1100 through the adiabatic compression process, the pressure and temperature of the air passing through the compressor 1100 increase.

The compressor 1100 is designed in the form of a centrifugal or axial compressor. The centrifugal compressor is used in small gas turbines, whereas a multi-stage axial compressor is applied to the large gas turbine 1000 shown in FIG. 1 to compress a large amount of air. In the multi-stage axial compressor 1100, a compressor blade 1130 compresses introduced air by rotating with rotation of a rotor disc and transfers compressed air to a compressor vane 1140 disposed at the following stage. The air is compressed gradually to a high pressures while passing through the multistage compressor blades 1130.

The compressor vane 1140 is mounted inside a housing 1150 in such a way that a plurality of compressor vanes 1140 form each stages. The compressor vanes 1140 guide the compressed air moved from the compressor blades 1130 disposed at a preceding stage toward the compressor blades 1130 disposed at a following stage. For example, at least a portion of the plurality of compressor vanes 1140 may be rotatably mounted within a preset range to adjust the inlet amount of air.

The compressor 1100 may be driven using a portion of the power output from the turbine 1300. To this end, as shown in FIG. 1, a rotating shaft of the compressor 1100 and a rotating shaft of the turbine 1300 may be directly connected to each other. For the large-scale gas turbine 1000, nearly half of the power generated by the turbine 1300 may be consumed to drive the compressor 1100. Therefore, improving the efficiency of the compressor 1100 directly influences improving the entire efficiency of the gas turbine 1000.

The turbine 1300 includes a rotor disc 1310 and a plurality of turbine blades and a plurality of turbine vanes arranged radially on the rotor disc 1310. The rotor disc 1310 has a circular plate shape, and a plurality of grooves are formed in an outer circumferential portion thereof. The grooves are formed with curved surfaces so that the turbine blades are inserted into the grooves, and the turbine vanes are mounted in a turbine casing. The turbine vanes are secured so as not to rotate and guide the flow direction of the combustion gas passing through the turbine blades. The turbine blades generate a rotating force while rotating by the combustion gas.

The combustor 1200 mixes compressed air supplied from the outlet of the compressor 1100 with fuel and combusts them at uniform pressure to produce high-energy combustion gas. FIG. 2 shows an example of the combustor 1200 used in the gas turbine 1000. The combustor 1200 may include a combustor casing 1210, a burner 1220, and a duct assembly 1250.

The combustor casing 1210 may cover a plurality of burners 1220 and have a circular shape. The plurality of burners 1220 may be arranged at a lower stream of the compressor 1100 and arranged along the ring-shaped combustor casing 1210. Each burner 1220 includes a plurality of nozzles 1230, and fuel discharged from the nozzles 1230 is mixed with air at an appropriate ratio to form a mixture suitable for combustion.

The gas turbine 1000 may use gas fuel, liquid fuel, or a combination thereof. It is desirable to establish combustion conditions that reduce the emission of exhaust gases subject to regulatory limits, such as carbon monoxide and nitrogen oxides. In recent years, premixed combustion has been widely employed. Although premixed combustion is relatively difficult to control, it provides advantages in that combustion temperatures are lowered and combustion is made more uniform, thereby reducing exhaust emissions.

In premixed combustion, compressed air is mixed with fuel discharged from the nozzle 1230 and then introduced into the combustor 1240. The initial ignition of premixed gas is performed using an igniter, and once combustion is stabilized, the combustion is maintained by supplying fuel and air.

Compressed air flows along an outer surface of the duct assembly 1250, through which high-temperature combustion gas flows, the burner 1220 and the turbine 1300 being connected to the duct assembly 1250, and is supplied to the nozzle 1230. In this process, the duct assembly 1250, which is heated by high-temperature combustion gas, is appropriately cooled.

Referring to FIG. 2, the duct assembly 1250 may include a liner 1251, a transition piece 1252, and a flow sleeve 1253. The duct assembly 1250 has a double-wall structure in which the flow sleeve 1253 surrounds the liner 1251 and the transition piece 1252. The compressed air penetrates into a ring-shaped space in the flow sleeve 1253to cool the liner 1251 and the transition piece 1252.

The liner 1251 is a tubular member connected to the burner 1220 of the combustor 1200, and a combustor chamber 1240 is an internal space of the liner 1251. The liner 1251 has a longitudinal first end portion coupled to the burner 1220 and a longitudinal second end portion coupled to the transition piece 1252.

The transition piece 1252 is connected to an entrance of the turbine 1300 to guide high-temperature combustion gas toward the turbine 1300. The transition piece 1252 has a longitudinal first end portion coupled to the liner 1251 and a longitudinal second end portion coupled to the turbine 1300. The flow sleeve 1253 protects both the liner 1251 and the transition piece 1252 to prevent high-temperature heat from being emitted outward directly.

The burner 1220 may include a nozzle casing 1260, a plurality of nozzles 1230, and a head plate 1270.

The nozzle casing 1260 is formed as a circular tube and is installed to surround the plurality of nozzles 1230. A first end portion of the nozzle casing 1260 is coupled to the duct assembly 1250, and a second end portion of the nozzle casing 1260 is coupled to the head plate 1270 installed behind the nozzle casing 1260. The plurality of nozzles 1230 may be installed within the nozzle casing 1260 and may be arranged in the circumferential direction of the nozzle casing 1260 at spaced intervals.

The head plate 1270 has a circular plate shape, and a nozzle flange 1231 (see FIG. 3) supporting the nozzle 1230 may be fixed thereto. A fuel injector for supplying fuel to the nozzle 1230 may be installed on the head plate 1270.

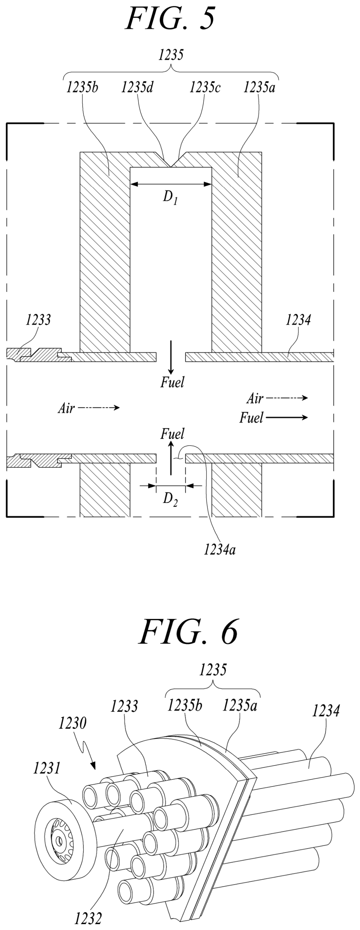

FIG. 3 is a perspective view showing a nozzle for a combustor according to an exemplary embodiment. FIG. 4 is a sectional view showing a side section of the nozzle. FIG. 5 is an enlarged view showing part A in FIG. 4.

Referring to FIGS. 3 and 4, the plurality of nozzles 1230 may be fixed to the head plate 1270. Each nozzle 1230 may be coupled to the head plate 1270 through a nozzle flange 1231. Each nozzle 1230 may be a fan-shaped assembly comprising a plurality of tubes, and the plurality of nozzles 1230 may be grouped into a generally cylindrical arrangement. However, the shape of each nozzle 1230 is not limited to the above-described configuration and may be modified within the scope that includes, for example, a cylindrical shape, a polyprismatic shape, or other suitable shapes as can be employed by those skilled in the art.

Each nozzle 1230 includes the nozzle flange 1231 fixed to the head plate 1270 to support the nozzle 1230, a fuel tube 1232 for supplying fuel, a mixing tube 1234 extending in a longitudinal direction, a fuel chamber 1235 through which the mixing tube 1234 is inserted and which is installed on an outer circumferential surface of the mixing tube 1234, and an air tube 1233 coupled to a front end of the mixing tube 1234. Fuel supplied to the fuel chamber 1235 via the fuel tube 1232 may be injected into the mixing tube 1234, and air may be supplied into the mixing tube 1234 via the air tube 1233. The mixing tube 1234 may mix the supplied air and fuel and inject the mixture into the combustion chamber 1240.

The nozzle flange 1231 may be coupled to the fuel tube 1232. A fuel intake passage 1231a is formed in the nozzle flange 1231 to allow fuel to be supplied to the fuel tube 1232.

The fuel tube 1232 may supply fuel to the fuel chamber 1235. The fuel tube 1232 may have a double tube structure. For example, the fuel tube 1232 may include a bypass passage 1232a formed in a central tube, and a main tube 1232b surrounding the central tube. The fuel tube 1232 may be coupled to a front plate 1235b of the fuel chamber 1235, with the central tube inserted through a rear plate 1235a of the fuel chamber 1235 and connected to a non-mixing tube 1236. However, it is noted that the structure of the fuel tube 1232 is not limited thereto, and the fuel tube 1232 may alternatively have a single tube structure and be connected only to the fuel chamber 1235.

The main tube 1232b may form a ring-shaped flow path surrounding the central tube. The ring-shaped main tube 1232b may be connected to an internal space of the fuel chamber 1235. Fuel introduced through the fuel intake passage 1231a may be supplied to the fuel chamber 1235 through the main tube 1232b.

To correspond to the shape of the main tube 1232b, the fuel intake passage 1231a connected to the main tube 1232b may include a plurality of fuel intake passages spaced apart in the circumferential direction on the nozzle flange 1231. Therefore, the fuel intake passage 1231a connected to the main tube 1232b may be arranged in a generally ring-shaped configuration.

The bypass passage 1232a may be formed in the central tube of the fuel tube 1232. Unlike the main tube 1232b which is connected to the internal space of the fuel chamber 1235, the bypass passage 1232a may bypass the fuel chamber 1235 and supply fuel to the non-mixing tube 1236. Accordingly, the fuel intake passage 1231a connected to the bypass passage 1232a may be formed at a central portion of the nozzle flange 1231.

The fuel chamber 1235 is a chamber having an internal space, and fuel supplied through the main tube 1232b may be filled into the internal space of the fuel chamber 1235. The fuel chamber 1235 may be arranged perpendicular to the mixing tube 1234, with the mixing tube 1234 inserted through the fuel chamber 1235. However, the structure of the fuel chamber 1235 is not limited thereto, and the fuel chamber 1235 may be arranged to be inclined with respect to the mixing tube 1234 or in other configurations within the scope of what can be employed by those skilled in the art.

The fuel chamber 1235 may include the front plate 1235b and the rear plate 1235a spaced apart in the longitudinal direction. The front plate 1235b and the rear plate 1235a may each include a plurality of insertion holes at corresponding location, through which the mixing tube 1234 may be inserted. In other words, the mixing tube 1234, which extends in the longitudinal direction, is inserted through the fuel chamber 1235 such that the fuel chamber 1235 may be mounted on the outer circumferential surface of the mixing tube 1234.

Referring to FIG. 5, the fuel chamber 1235 may be located at the front end of the mixing tube 1234. In other words, the front plate 1235b may be installed on an outer circumferential surface of the front end of the mixing tube 1234, and the rear plate 1235a may be installed on an outer circumferential surface at a position spaced rearward from the front plate 1235b by a distance D1. Accordingly, the front end of the mixing tube 1234 may not substantially protrude from the fuel chamber 1235.

Meanwhile, when a separate tube is welded to the fuel chamber 1235, welding is performed along a contact surface between the tube and the fuel chamber 1235. In the conventional structure, the fuel chamber 1235 is located at a middle portion of the tube such that an end portion of the tube protrudes from the fuel chamber 1235. As a result, the protruding tube portion limits the available workspace for a welding operator, thereby preventing the welding operator from welding the tubes to the fuel chamber 1235. Therefore, in the conventional nozzle 1230, the fuel chamber 1235 and the tube bundle are unavoidably joined by brazing.

However, in the nozzle 1230 according to the present disclosure, the fuel chamber 1235 is welded to the mixing tube 1234 prior to coupling the air tube 1233 to the mixing tube 1234. In this structure in which the mixing tube 1234 does not substantially protrude from the fuel chamber 1235, the welding operator can be positioned in the front space of the mixing tube 1234, thereby securing sufficient workspace for performing the welding operation.

Accordingly, unlike the conventional structure using the brazing method, welding can be performed. Therefore, by employing welding, structural stiffness and heat resistance of the nozzle 1230 can be enhanced, and airtightness between the fuel chamber 1235 and the mixing tube 1234 can be enhanced. Further, this structure allows the operator to perform welding without interference from the mixing tube 1234, thus improving the convenience of the welding operation.

**In** addition, a rear side wall 1235c may be formed at a radial edge of the rear plate 1235a, and a front side wall 1235d may be formed at a radial edge of the front plate 1235b. The rear side wall 1235c and the front side wall 1235d may protrude toward each other and come into contact. Accordingly, the edges of the rear plate 1235a and the front plate 1235b are contact each other at the rear side wall 1235c and the front side wall 1235d, thereby dividing the internal space of the fuel chamber 1235. The internal space of the fuel chamber 1235 may be filled with fuel supplied through the main tube 1232b.

The mixing tube 1234 is a tube that mixes and injects fuel and air, and may have an elongated shape in the longitudinal direction. A plurality of mixing tubes 1234 may be provided in a bundle.

Each mixing tube 1234 may include a plurality of fuel injection holes 1234a spaced apart from each other in the circumferential direction. The fuel injection holes 1234a may be located between the front plate 1235b and the rear plate 1235a. Therefore, the fuel filled in the internal space of the fuel chamber 1235 may be injected into the mixing tube 1234 through the fuel injection holes 1234a.

A spacing distance D1 between the rear plate 1235a and the front plate 1235b may be equal to or slightly greater than a diameter D2 of the fuel injection holes 1234a. That is, a relationship of D1 ≥ D2 can be satisfied. Because the front plate 1235b is installed on the outer circumferential surface of the front end of the mixing tube 1234, the rear plate 1235a may be spaced apart from the front end of the mixing tube 1234 by at least the diameter D2.

The air tube 1233 is a component provided separately from the mixing tube 1234 and may be coupled to the front end of the mixing tube 1234 after the mixing tube 1234 and the fuel chamber 1235 are welded. The air tube 1233 may be coupled to the front end of the mixing tube 1234 in an extension direction of the mixing tube 1234. That is, with reference to the front end of the mixing tube 1234, the air tube 1233 may be located at a front side, and the fuel chamber 1235 may be located at a rear side.

While in the conventional structure the air tube 1233 and the mixing tube 1234 are formed integrally, the nozzle 1230 for a combustor according to the present disclosure may be configured such that the air tube 1233 is separated from the mixing tube 1234. Because the air tube 1233 is not coupled to the mixing tube 1234, the mixing tube 1234 may be coupled to the fuel chamber 1235 with a short length. Accordingly, the welding operator can be positioned at the front end of the mixing tube 1234, thereby securing sufficient workspace for welding. As a result, the fuel chamber 1235 and the mixing tube 1234 may be welded to each other, thereby improving structural stiffness and heat-resistance of the nozzle 1230 and enhancing airtightness between the fuel chamber 1235 and the mixing tube 1234.

The compressed air may be introduced into the front space of the air tube 1233 and supplied to the mixing tube 1234 through the air tube 1233. Accordingly, compressed air and fuel are present together in the mixing tube 1234, and the mixing tube 1234 may mix air and fuel and inject the mixture into the combustion chamber 1240.

The air tube 1233 may be coupled to the mixing tube 1234 via brazing, unlike the fuel chamber 1235. However, the coupling method is not limited thereto, and the air tube 1233 may be coupled to the front end of the mixing tube 1234 by various methods known to those skilled in the art, such as welding, soldering, or other suitable techniques.

Referring to FIG. 4, at least one non-mixing tube 1236 may be disposed among the plurality of mixing tube 1234. The non-mixing tube 1236 may extend in the longitudinal direction, similar to the mixing tube 1234, and may be coupled to the bypass passage 1232a of the fuel tube 1232. The bypass passage 1232a formed in the central tube of the fuel tube 1232 may supply fuel to the non-mixing tube 1236 without passing through the fuel chamber 1235.

The non-mixing tube 1236 is not connected to the air tube 1233, unlike the mixing tube 1234, so that compressed air may not be supplied to the non-mixing tube 1236. Accordingly, the non-mixing tube 1236 may discharge pure fuel without being mixed with air through an outlet.

The outlet of the non-mixing tube 1236 may be coupled to a nozzle diffuser 1237. The nozzle diffuser 1237 may have a double-tube structure including an inner tube and an outer tube. The pure fuel discharged from the non-mixing tube 1236 may be injected through the outer tube of the nozzle diffuser 1237. Accordingly, the combustor 1200 may maintain stable flame even under low-load conditions or during a startup phase, thereby improving the reliability of the combustor.

The inner tube of the nozzle diffuser 1237 may be closed at a forward end and opened at a rearward end. An air inlet hole may be formed on an outer circumferential surface of the nozzle diffuser 1237 and connected to the inner tube through an air supply tube formed through the outer tube. Therefore, compressed air surrounding the plurality of mixing tubes 1234 is injected into the inner tube of the nozzle diffuser 1237 through the air inlet hole and discharged through the inner tube. As a result, the injected compressed air may locally cool the inner portion of the combustor 1200, thereby lowering the combustion temperature, reducing heat load on the turbine, and decreasing generation of nitrogen oxides (NOx).

Hereinbelow, a method for manufacturing a nozzle for a combustor according to an exemplary embodiment will be described.

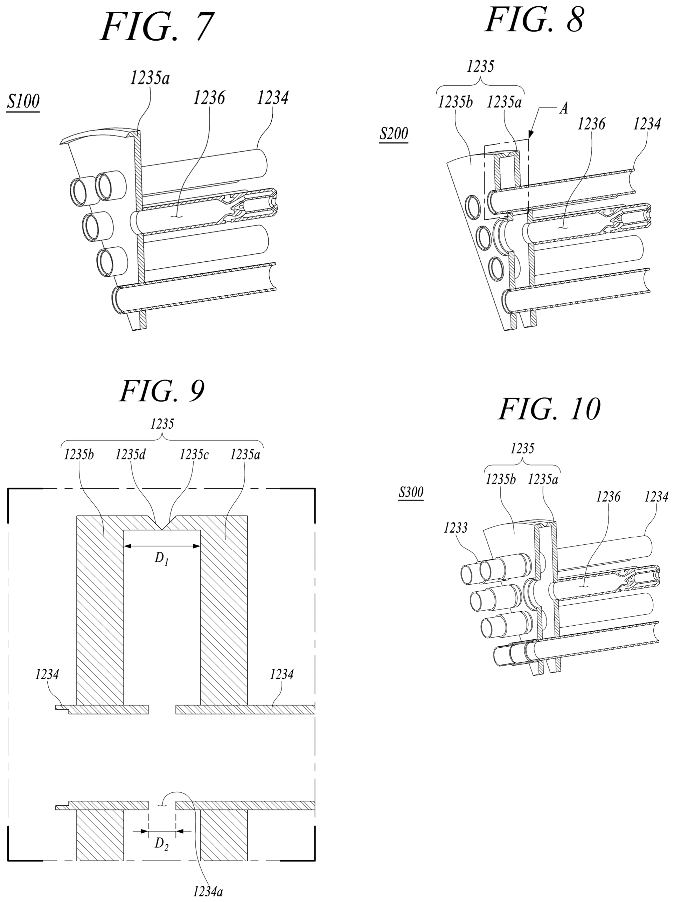

FIG. 6 is a perspective view showing the nozzle for a combustor at another angle. FIG. 7 is a perspective view showing a primarily disposing stage of a method for manufacturing a nozzle for a combustor according to an exemplary embodiment. FIG. 8 is a perspective view showing a secondarily disposing stage of the method for manufacturing a nozzle. FIG. 9 is an enlarged-sectional view showing part A in FIG. 8. FIG. 10 is a perspective view showing an air tube coupling stage of the method for manufacturing a nozzle.

As shown in FIGS. 6 to 10, a method for manufacturing the nozzle 1230 for a combustor includes primarily disposing the mixing tube 1234 and the rear plate 1235a (operation S100), secondarily disposing the front plate 1235b (operation S200), and coupling the air tube 1233 to the front end of the mixing tube 1234 (operation S300).

Referring to FIG. 7, in the primarily disposing (operation S100), the plurality of mixing tubes 1234 extending in the longitudinal direction and the rear plate 1235a are provided. The rear plate 1235a includes the plurality of insertion holes through which the plurality of mixing tubes 1234 may be inserted. The rear plate 1235a is provided on the mixing tubes 1234 such that the rear plate 1235a is spaced rearward from the front end of each mixing tube 1234. For example, the rear plate 1235a may be disposed at a distance from the front end of the mixing tube 1234 within a range of 2 cm to 10 cm. That is, the rear plate 1235a may be disposed at a location relatively close to the front end of each mixing tube 1234.

After the primarily disposing (operation S100), the rear plate 1235a and the mixing tube 1234 may be coupled to each other via welding. Because a protruding length of each mixing tube 1234 from the rear plate 1235a is relatively short, the welding operator may access the front space of each mixing tube 1234. That is, because sufficient workspace for welding is available, unlike in the conventional structure in which each mixing tube 1234 and the fuel chamber 1235 are joined via brazing due to workspace limitations, each mixing tube 1234 and the rear plate 1235a can be coupled to each other via welding.

Referring to FIGS. 8 and 9, after coupling the rear plate 1235a, the secondarily disposing (operation S200) may be performed by disposing the front plate 1235b. In the secondarily disposing (operation S200), the front plate 1235b may be disposed on the outer circumferential surface of the front end of the mixing tube 1234. Similar to the rear plate 1235a, each mixing tube 1234 may be inserted through the front plate 1235b and disposed forward of the rear plate 1235a. That is, the front plate 1235b and the rear plate 1235a may be spaced apart from each other by the predetermined distance D1, and the spacing may define the internal space of the fuel chamber 1235.

Subsequently, the front plate 1235b may be coupled to the outer circumferential surface of the front end of each mixing tube 1234. Because the front plate 1235b is positioned on the outer circumferential surface of the front end of the mixing tube 1234, the mixing tube 1234 can be prevented from protruding beyond the front plate 1235b. Accordingly, the welding operator can access the front space of the mixing tubes 1234, thereby securing sufficient workspace for performing the welding operation.

Unlike the conventional structure in which the mixing tubes 1234 and the fuel chamber 1235 are coupled via brazing due to workspace limitations, in the embodiment of the present disclosure, the mixing tubes 1234 may be coupled to the rear plate 1235a, and the mixing tubes 1234 can be coupled to the front plate 1235b, via welding. Welding may provide greater structural stiffness and heat resistance than brazing, so that the nozzle 1230 for a combustor can have enhanced structural stiffness and heat resistance.

In contrast, the conventional brazing method couples the plurality of tubes to the fuel chamber 1235 simultaneously. However, the heat treatment conditions required for brazing are demanding, and incomplete coupling between the tubes and the fuel chamber may occur, potentially causing cracks. Accordingly, even if a single tube of the plurality of tubes is not properly coupled to the fuel chamber 1235, there is a risk of fuel leakage. In the embodiment of the present disclosure, however, the nozzle 1230 for a combustor can couple each mixing tube 1234 to the rear plate 1235a and the front plate 1235b via welding completely, thereby improving airtightness between the fuel chamber 1235 and the mixing tube 1234.

The rear side wall 1235c may protrude from a radial edge of the rear plate 1235a toward the front plate 1235b, and the front side wall 1235d may protrude from a radial edge of the front plate 1235b toward the rear plate 1235a. The rear side wall 1235c and the front side wall 1235d may be in contact with each other, so that the internal space of the fuel chamber 1235 can be divided by the front plate 1235b, the rear plate 1235a, and the respective side walls 1235c and 1235d.

The rear side wall 1235c and the front side wall 1235d may also be coupled to each other via welding. Welding between the side walls 1235a and 1235b may be performed either before or after the front plate 1235b and the mixing tubes 1234 are coupled. When the rear side wall 1235c and the front side wall 1235d are welded, the internal space of the fuel chamber 1235 may be blocked from the outer space.

Subsequently, as shown in FIG. 10, the coupling of the air tube (operation S300) may be performed by coupling the air tube1233 to the front end of the extended mixing tube 1234. The air tube 1233 may be coupled to the front end of the mixing tube 1234 in an extension direction of the mixing tube 1234. That is, with reference to the front end of the mixing tube 1234, the air tube 1233 may be coupled to the front portion, while the fuel chamber 1235 may be coupled to a rear portion. The air tube 1233 may be coupled to the front end of the mixing tube 1234 via brazing. However, the coupling method is not limited thereto, and the air tube 1233 may also be coupled to the front end of the mixing tube via welding or other suitable techniques.

Unlike the conventional structure in which the air tube 1233 and the mixing tube 1234 are formed integrally, the nozzle 1230 for a combustor according to the present disclosure may be configured such that the air tube 1233 is separated from the mixing tube 1234. Therefore, the fuel chamber 1235 may be welded to the mixing tube 1234 with a relatively short length, because the mixing tube 1234 is not coupled to the air tube 1233. Accordingly, the welding operator can be positioned at the front end of the mixing tube 1234, thereby securing sufficient workspace for welding.

Accordingly, unlike the conventional structure in which brazing is used due to workspace limitations, the fuel chamber 1235 and the mixing tube 1234 can be coupled to each other via welding, thereby enhancing structural stiffness and heat resistance of the nozzle 1230.

While one or more exemplary embodiments have been described with reference to the accompanying drawings, it will be apparent to those skilled in the art that various modifications and variations can be made through additions, substitutions, changes, or deletions of components without departing from the scope of the disclosure as disclosed in the accompanying claims, and these modifications and changes fall within the scope and spirit of the disclosure as defined in the appended claims.

## Claims

1. A method for manufacturing a nozzle for a combustor, the method comprising:
primarily disposing a rear plate at a location spaced apart from a front end of a mixing tube, the mixing tube being inserted through the rear plate;
secondarily disposing a front plate on an outer circumferential surface of the front end of the mixing tube, the mixing tube being inserted through the front plate; and
coupling an air tube, which extends in a longitudinal direction, to the front end of the mixing tube in an extended configuration.

2. The method of claim 1, further comprising:
coupling the mixing tube and the rear plate to each other via welding between the primarily disposing of the rear plate and the secondarily disposing of the front plate.

3. The method of claim 2, further comprising:
coupling the mixing tube and the front plate to each other via welding between the secondarily disposing of the front plate and the coupling of the air tube.

4. The method of claim 2 or 3, wherein the rear plate comprises a rear side wall protruding toward the front plate,
the front plate comprises a front side wall protruding toward the rear plate, and
the rear side wall and the front side wall are in contact with each other.

5. The method of claim 4, further comprising: coupling the rear side wall and the front side wall to each other via welding.

6. The method of any one of the claims 2-5, wherein the coupling of the air tube is performed by coupling the air tube to the mixing tube via brazing.

7. A nozzle for a combustor, the nozzle comprising:
a mixing tube extending in a longitudinal direction, the mixing tube being configured to mix air and fuel;
a fuel chamber installed on an outer circumferential surface of the mixing tube, the mixing tube being inserted through the fuel chamber, and the fuel chamber configured to supply the fuel to the mixing tube; and
an air tube, provided separately from the mixing tube, coupled to a front end of the mixing tube in an extended configuration, the air tube configured to supply air into the mixing tube.

8. The nozzle of claim 7, wherein with reference to the front end of the mixing tube, the air tube is disposed at a front portion thereof, and the fuel chamber is disposed at a rear portion thereof.

9. The nozzle of claim 7 or 8, wherein the fuel chamber comprises a front plate disposed on an outer circumferential surface of the front end of the mixing tube; and a rear plate spaced apart from the front plate in the longitudinal direction.

10. The nozzle of claim 9, wherein the mixing tube comprises a plurality of fuel injection holes spaced apart from each other in a circumferential direction, the plurality of fuel injection holes being located between the front plate and the rear plate.

11. The nozzle of claim 9 or 10, further comprising a fuel tube coupled to the front plate and supplying fuel to the fuel chamber.

12. The nozzle of claim 11, wherein the fuel tube is disposed parallel to the air tube.

13. The nozzle of claim 11 or 12, wherein the fuel tube has a double tube structure, comprising:
a bypass passage formed in a central tube; and
a main tube surrounding the central tube.

14. The nozzle of claim 13, wherein the main tube is connected to an inner portion of the fuel chamber, and the central tube is inserted through the rear plate.

15. The nozzle of claim 13 or 14, further comprising a non-mixing tube disposed parallel to the mixing tube and coupled to the rear plate, wherein the non-mixing tube is connected to the central tube.
